# EUROPEAN PATENT APPLICATION

(11) **EP 4 213 488 A1**
(43) Date of publication of application: **19.07.2023**
(21) Application number: 22151217.1
(22) Date of filing: 12.01.2022
(51) Int. Cl.: H04N 21/254, H04N 21/258, H04N 21/266, H04N 21/41, H04N 21/478, H04N 21/6334, H04N 21/835, H04N 21/475, H04N 21/4623

(54) **METHOD FOR ACQUIRING CONFIGURATION INFORMATION BY A RECEPTION DEVICE, CORRESPONDING COMPUTER PROGRAM PRODUCT AND DEVICES**

(71) Applicant: Nagravision Sarl, 1033 Cheseaux-sur-Lausanne (CH)
(72) Inventor: Bieber, Yann, 1033 CHESEAUX-SUR-LAUSANNE (CH); Stransky-Heilkron, Philippe, 1033 CHESEAUX-SUR-LAUSANNE (CH)
(74) Representative: Ipside

(57) **Abstract**

A method is proposed for acquiring, from a management center server (120), configuration information by a reception device (100) connected to the management center server through a broadcast network, the configuration information allowing the update of the internal setting of the reception device. Such method comprises:
- providing (S210) a request for the configuration information to a communication interface for allowing a terminal equipment (110) connected to the management center server through a communications network to obtain the request and to send (S220) a corresponding request to the management center server;
- receiving (5240) the configuration information provided by the management center server as part of a data stream broadcasted in the broadcast network. The configuration information is associated to a filtering item in the data stream. The filtering item is known from the reception device for allowing the reception device to identify the configuration information in the data stream.

## Description

### 1. FIELD OF THE DISCLOSURE

The field of the disclosure is that of the configuration of receiving devices connected to broadcast networks.

More specifically, the disclosure relates to a method for acquiring information that allow the configuration of such receiving devices.

The disclosure can be of interest in any field wherein such device connected to a broadcast network needs to be configured. This is the case for instance in the field of set-top boxes, of connected televisions, e.g. Hybrid Broadcast Broadband televisions, or HbbTV, or cable TV decoders, etc.

### 2. TECHNOLOGICAL BACKGROUND

In the sequel, we focus more particularly on describing an existing problem in the field of connected TV, e.g. HbbTV, with which the inventors of the present patent application were confronted. The invention is of course not limited to this particular field of application, but is of interest for the acquiring information required for the execution of applications on any type of device connected to a broadcast network.

Connected TVs like HbbTVs are more and more used. Such receiving devices is connected, on one hand, to broadcast networks for receiving broadcasted contents and, on the other hand, to broadband networks for acquiring additional content, information for executing applications or information for the update of their internal setting. Indeed, a broadcast network implements a one-way communication connection toward the receiving device. A two-way communication connection through a broadband network (e.g. an Internet Protocol based communications network) is thus required in most cases for allowing such acquisition of additional content or information that often involves a request/response scheme between the receiving device and a distant server, e.g. of a content provider. For instance, the playback of some content on such TV may require the grant of a digital rights management, or DRM, license. However, the grant of a DRM license may require the execution of a request/response mechanism between the TV and a DRM license server. The same situation holds e.g. when a user wants to buy a content.

In practice, more and more consumers have connected their TV on their broadband network for purchasing products and services. However, there is also a large number of consumers that have not connected their TV to a broadband network. In this case, the TV can access only to the broadcast content and thus may be limited in the available applications due to the one-way behaviour of such network. The same problematic hold e.g. for set-top boxes.

There is thus a need for a method allowing a receiving device, e.g. such as a set-top box or a HbbTV, which is not connected to a broadband network to acquire the information allowing the update of the internal setting of the reception device.

### 3. SUMMARY

A particular aspect of the present disclosure relates to a method for acquiring, from a management center server, configuration information by a reception device connected to the management center server through a broadcast network, the configuration information allowing the update of the internal setting of the reception device. According to such method, the reception device executes:
- providing a request for the configuration information to a communication interface for allowing a terminal equipment connected to the management center server through a communications network to obtain the request and to send a corresponding request to the management center server;
- receiving the configuration information provided by the management center server as part of a data stream broadcasted in the broadcast network. The configuration information are associated to a filtering item in the data stream. The filtering item are known from the reception device for allowing the reception device to identify the configuration information in the data stream.

Thus, the present disclosure proposes a new and inventive solution for configuring a reception device (e.g. a connected TV) connected to the management center server through a broadcast network, i.e. through a one-way connection.

More particularly, the proposed solution relies on the use of a terminal equipment connected to the management center server through a communications network and that behaves as a third-party device able to forward the request for the configuration information from the receiving device to the management center server. The management center server, upon reception of the request through the communications network, can in turn provide the configuration information through the broadcast network. The reception device thus acquires the configuration information even when it is not connected to a two-way communications network (e.g. a broadband network) in addition to the broadcast network.

In some embodiments, the providing a request for the configuration information to a communication interface comprises: providing the request to a wireless communications transceiver for sending the request to the terminal equipment through a wireless communication link.

Such wireless communications transceiver may implement a short-range wireless communications protocol, e.g. a Bluetooth protocol or a Near Field Communication, or NFC, protocol.

In some embodiments, the providing a request for said configuration information to a communication interface comprises:
- generating a graphical item representative of the request;
- providing the graphical item to a display for displaying the graphical item on the display for allowing the terminal equipment to obtain the request by scanning the graphical item.

Thus, the reception device can provide the request to the terminal equipment even when the reception device has no corresponding wireless communications transceiver implemented within.

In some embodiments, the request for the configuration information comprises filtering information allowing to obtain the filtering item.

Thus, the terminal equipment does not need to have knowledge of the filtering item. The filtering information can further be kept secret into the request, e.g. using an end-to-end encryption scheme of the request between the reception device and the management center server.

In some embodiments, the reception device executes: providing the filtering information allowing to obtain the filtering item to the communication interface.

Thus, the terminal equipment is "paired" with the reception device in that it knows the filtering information.

In some embodiments, the providing the filtering information to the communication interface comprises: providing the filtering information to the wireless communications transceiver for sending the filtering information to the terminal equipment through the wireless communication link.

In some embodiments, the providing the filtering information to the communication interface comprises:
- generating a graphical item, named graphical filtering information, representative of the filtering information;
- providing the graphical filtering information to the display for displaying the graphical filtering information on the display for allowing the terminal equipment to obtain the filtering information by scanning the graphical filtering item.

Thus, the reception device can provide the filtering information to the terminal equipment even when the reception device has no wireless communications transceiver available.

According to another aspect of the disclosure, the terminal equipment executes:
- obtaining the request, from the reception device, for the configuration information;
- sending a corresponding request for the configuration information to the management center server through the communications network for having the management center server to provide the configuration information to the reception device as part of a data stream broadcasted in the broadcast network. The corresponding request comprises filtering information allowing to obtain a filtering item known from the reception device and to be associated to the configuration information in the data stream for allowing the reception device to identify the configuration information in the data stream.

In some embodiments, the obtaining a request from the reception device comprises: receiving the request through a wireless communication link with the reception device.

In some embodiments, the obtaining a request from the reception device comprises: scanning a graphical item representative of the request displayed on a display.

In some embodiments, the request for the configuration information comprises the filtering information.

In some embodiments, the terminal equipment executes:
- receiving the filtering information through the wireless communication link with the reception device; and
- including the filtering information in the corresponding request.

In some embodiments, the terminal equipment executes:
- obtaining the filtering information by scanning a graphical representation of the filtering information displayed on the display; and
- including the filtering information in the corresponding request.

In some embodiments, the terminal equipment executes:
- obtaining the filtering information as data entered on input means of the terminal equipment; and
- including the filtering information in the corresponding request.

According to another aspect of the disclosure, the management center server executes:
- receiving a request for the configuration information, the request being sent by the terminal equipment, the request comprising filtering information allowing to obtain a filtering item known from the reception device;
- sending the configuration information to the reception device as part of a data stream broadcasted in the broadcast network. The filtering item is associated to the configuration information in the data stream for allowing the reception device to identify the configuration information in the data stream.

In some embodiments, the management center server executes: obtaining the filtering item based on the filtering information.

In some embodiments, the filtering information comprises the filtering item.

In some embodiments, the configuration information allowing for the execution of at least one application belongs to the group comprising:
- a license agreement for the playback of a digital rights management, or DRM, protected content on the reception device; and
- an authorization for the playback of a pay content on the reception device.

In some embodiments, the graphical item is of a type belonging to the group comprising:
- a Quick Response, or QR, code type;
- a Just-Another-Bar-Code, or JAB, type; and
- a textual representation.

In some embodiments, the filtering item comprises a unique identifier of the reception device or a universally unique identifier generated by the reception device.

In some embodiments, the reception device is not connected to a broadband network.

Another aspect of the present disclosure relates to a computer program product comprising program code instructions for implementing the above-mentioned method for acquiring configuration information (in any of the different embodiments discussed above), when said program is executed on a computer or a processor.

Another aspect of the present disclosure relates to a device configured for implementing all or part of the steps of the above-mentioned method for acquiring configuration information as executed by the reception device (in any of the different embodiments discussed above). Thus, the features and advantages of this device are the same as those of the corresponding steps of said method. Therefore, they are not detailed any further.

Another aspect of the present disclosure relates to a device configured for implementing all or part of the steps of the above-mentioned method for acquiring configuration information as executed by the terminal equipment (in any of the different embodiments discussed above). Thus, the features and advantages of this device are the same as those of the corresponding steps of said method. Therefore, they are not detailed any further.

Another aspect of the present disclosure relates to a device configured for implementing all or part of the steps of the above-mentioned method for acquiring configuration information as executed by the management center server (in any of the different embodiments discussed above). Thus, the features and advantages of this device are the same as those of the corresponding steps of said method. Therefore, they are not detailed any further.

### 4. LIST OF FIGURES

Other features and advantages of embodiments shall appear from the following description, given by way of indicative and non-exhaustive examples and from the appended drawings, of which:
- Figure 1 illustrates a reception device connected to a management center server through a broadcast network and a terminal equipment connected to the management center server through a communications network according to one embodiment of the present disclosure;
- Figure 2 illustrates the steps of a method for acquiring configuration information by the reception device of Figure 1 according to one embodiment of the present disclosure;
- Figure 3 illustrates an example of the structural blocks of a device allowing all or part of the corresponding steps of the method of Figure 2 to be implemented by the reception device;
- Figure 4 illustrates an example of the structural blocks of a device allowing all or part of the corresponding steps of the method of Figure 2 to be implemented by the terminal equipment;
- Figure 5 illustrates an example of the structural blocks of a device allowing all or part of the corresponding steps of the method of Figure 2 to be implemented by the management center server.

### 5. DETAILED DESCRIPTION

In all of the Figures of the present document, the same numerical reference signs designate similar elements and steps.

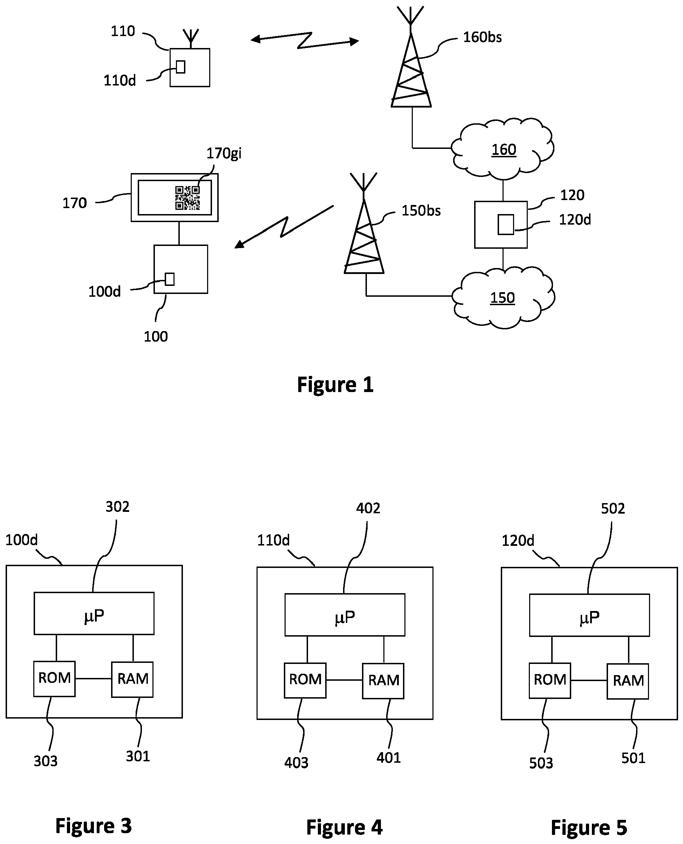

Referring now to **Figure 1****,** we describe a reception device 100 connected to a management center server 120 through a broadcast network 150 and a terminal equipment 110 connected to the management center server 120 through a communications network 160.

More particularly, the reception device 100 is a set-top box. The reception device 100 receives the stream broadcasted by the broadcast network 150 through the base station 150bs. The reception device 100 decodes the stream to extract a content from the stream. The reception device 100 provides the content, in a suited format for display, to a communication interface (e.g. a "High-Definition Multimedia Interface", or HDMI). A display 170 (e.g. a TV screen) is connected to the communication interface. The display 170 thus receives the content through the communication interface for displaying the content. However, in other embodiments, the reception device 100 comprises such display, e.g. when the reception device 100 is an HbbTV.

Back to Figure 1, the reception device 100 may require some configuration information allowing the update of its internal setting. For instance, the reception device 100 may acquire DRM rights for the playback of a protected content or may acquire an authorization for the playback of a pay content. However, in case the reception device 100 has no access to a broadband network, it cannot send a request for such configuration information to the management center server 120.

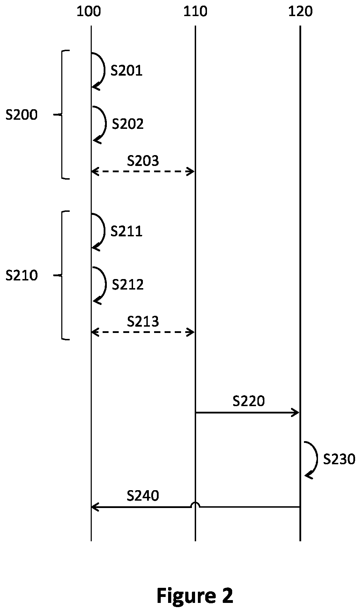

For acquiring such configuration information, the reception device 100, the terminal equipment 110 and the management center server 120 implement the method for acquiring configuration information detailed below in relation with Figure 2.

For instance, in some embodiments related to the configuration of Figure 1, the reception device 100 generates a graphical item 170gi (e.g. a Quick Response, or QR, code) representative of the request for the configuration information. The reception device 100 provides the graphical item 170gi to the communication interface for having the display 170 to display the graphical item 170gi.

The terminal equipment 110 (e.g. a smartphone, a tablet, a personal computer, ...) obtains the request from the reception device 100 by scanning the graphical item 170gi displayed on the display 170 and decodes the information herein. The terminal equipment 110 sends a corresponding request to the management center server 120 through the communications network 160. More particularly, the communications network 160 is a cellular network, e.g. a Third Generation Partnership Project, hereafter 3GPP, 2G, 3G, 4G or 5G cellular network. The terminal equipment 110 is connected to the communications network 160 through the base station 160bs. However, in other embodiments, the communications network 160 implements other types of communications networks, e.g. a wired communications network.

The management center server 120 (e.g. a backend server of an operator, a DRM license server, ...) receives the corresponding request sent by the terminal equipment 110 through the communications network 160. Such corresponding request comprises filtering information allowing to obtain a filtering item known from the reception device 100. Depending on the implementations, such filtering information may comprise the filtering item itself (e.g. a unique identifier of the reception device 100), or may allow the management center server 120 to obtain the filtering item based on the filtering information. For instance, the filtering information may be an account identifier associated to the reception device 100 within the management center server 120. Such account identifier may be associated to the unique identifier of the reception device 100 within the management center server 120. The management center server 120 may thus obtain the unique identifier of the reception device 100 from the account identifier.

Back to Figure 1, the management center server 120 sends the requested configuration information to the reception device 100 as part of a data stream broadcasted in the broadcast network 150. The filtering item is associated to the configuration information in the data stream so that the reception device 100 can identify and retrieve the configuration information in the data stream.

Other embodiments of the method for acquiring configuration information by the reception device 100 are detailed below in relation with Figure 2. In order to implement the corresponding steps of such method, the reception device 100 comprises a device 100d that implements said steps. An example of the structural blocks that can be implemented in the device 100d are further described below in relation with Figure 3. Conversely, the terminal equipment 110 comprises a device 110d that implements the corresponding steps of said method. An example of the structural blocks that can be implemented in the device 110d are further described below in relation with Figure 4. The management center server 120 in turn comprises a device 120d that implements the corresponding steps of said method. An example of the structural blocks that can be implemented in the device 120d are further described below in relation with Figure 5.

Referring now to **Figure 2****,** we describe the steps of the method for acquiring configuration information by the reception device 100.

In a **step S200,** the reception device 100 provides the filtering information allowing to obtain the filtering item to the communication interface for allowing the terminal equipment 110 to obtain the filtering information.

Consequently, the terminal equipment 110 is "paired" with the reception device 100 in that the terminal equipment 110 also knows the filtering information. More particularly, the terminal equipment 110 has thus the knowledge of the filtering information independently of the request for the configuration information (step S210 below). The terminal equipment 110 is thus able to include the filtering information in the corresponding request sent to the management center server 120 (step S220 below) even if the initial request provided by the reception device 100 does not include the filtering information.

For instance, in case the configuration information is required by an application that is executed on the reception device 100, such application can require the configuration information without having the knowledge of the filtering information allowing to obtain the filtering item. This improves the confidentiality of the data associated to the reception device 100 in respect of the applications executed by the reception device 100. This may be relevant when the filtering item is a sensitive data, e.g. the unique identifier of the reception device 100, that is not expected to be known by the applications running on the reception device 100. However, in other embodiments, the filtering item may be another type of data generated by the reception device 100 in order to avoid providing sensitive data like its unique identifier to the terminal equipment 110. For instance, the filtering item may be a universally unique identifier, or UUID, generated by the reception device 100.

Back to Figure 2, in a **step S201,** for achieving such "pairing", the reception device 100 generates a graphical item, named graphical filtering information, representative of the filtering information. In a **step S202,** the reception device 100 provides the graphical filtering information to the display 170 for displaying the graphical filtering information on the display 170.

Correspondingly, in **step S203,** the terminal equipment 110 obtains the filtering information by scanning the graphical representation of the filtering information displayed on the display 170.

Depending on the embodiments, the graphical filtering information may take the form of a QR code, or of a JAB code type, or even a textual representation of the filtering information. In this later case, the terminal equipment 110 may execute a text recognition method for retrieving the filtering information from a picture of the textual representation of the filtering information displayed on the display 170.

The steps S201, S202 and S203 as described above correspond for instance to the configuration of Figure 1. However, in other embodiments, such "pairing" is not achieved through the generation and the display of a graphical item by the reception device 100. For instance, the communication interface of the reception device 100 may comprise a wireless communications transceiver. It may be a short-range communications transceiver like e.g. a Bluetooth transceiver or a NFC transceiver. In such embodiments, the reception device 100 provides the filtering information to the wireless communications transceiver in step S202 and sends the filtering information to the terminal equipment 110 through a wireless communication link in step S203. Conversely, in step S203 the terminal equipment 110 receives the filtering information through the wireless communication link established with the reception device 100.

In other embodiments, such "pairing" is directly performed by a user of the terminal equipment 110 that may enter the filtering information on input means (e.g. a touch screen) of the terminal equipment 110. For instance, the filtering information may be displayed in textual form on the display 170 by the reception device 100, and the user may read the filtering information and enter the corresponding characters on the input means of the terminal equipment 110.

In other embodiments, the step S200 is not implemented and the "pairing" as discussed above is not implemented. This holds for instance when the reception device 100 includes the filtering information in the request for the configuration information (step S210 below). In such case, the terminal equipment 110 does not need to know the filtering information. The filtering information can further be kept secret into the request, e.g. using an end-to-end encryption scheme of the request between the reception device 100 and the management center server 120.

Back to Figure 2, in a **step S210,** the reception device 100 provides a request for the configuration information to the communication interface for allowing the terminal equipment 110 to obtain the request.

Such configuration information allows the update of the internal setting of the reception device 100. For instance, the configuration information may relate to a license agreement for the playback of a digital rights management, or DRM, protected content on the reception device 100 or to an authorization for the playback of a pay content on the reception device 100. In this case, the configuration information allows changing the internal setting of the reception device 100 for authorizing the rendering of the protected content or of the pay content. The configuration information may also relate to the download and installation of an application received through the broadcast network 150. In this case, the installation of the application necessarily updates the setting of the reception device 100 for allowing the installation of the application.

For providing such request, in a **step S211,** the reception device 100 generates a graphical item 170gi representative of the request. For instance, the data required for building such request are encoded by the reception device 100 for generating the graphical item 170gi. For instance, such data may comprise the configuration information itself, the network address of the management center server 120, data relating to the encryption scheme to be used by the management center server 120 for providing the configuration information, etc.

Back to Figure 2, in a **step S212,** the reception device 100 provides the graphical item 170gi to the display 170 for displaying the graphical item on the display 170. Correspondingly, in **step S213,** the terminal equipment 110 obtains the request by scanning the graphical item 170gi displayed on the display 170. As discussed above, depending on the embodiments, the graphical item 170 may take the form e.g. of a QR code, or of a Just-Another-Bar-Code, or JAB, code type.

The steps S211, S212 and S213 as described above correspond for instance to the configuration of Figure 1. However, in other embodiments, for providing the request, the reception device 100 does not generate a graphical item. For instance, referring to the embodiments discussed above wherein the communication interface of the reception device 100 comprise a wireless communications transceiver, the reception device 100 provides the request to the wireless communications transceiver in step S212 and sends the request to the terminal equipment 110 through the wireless communication link in step S213. Conversely, in step S213 the terminal equipment 110 receives the request through the wireless communication link established with the reception device 100.

Back to Figure 2, in **step S220,** the terminal equipment 110 sends a corresponding request for said configuration information to the management center server 120 through the communications network 160. Conversely, in step S220, the management center server 120 receives the corresponding request sent by the terminal equipment 110 through the communications network 160. The corresponding request comprises the filtering information known from the reception device 100.

In some embodiments, the request provided by the reception device 100 to the terminal equipment 110 comprises the filtering information, e.g. when the step S200 is not implemented as discussed above. Conversely, in some embodiments wherein the step S200 is implemented (in any of the variants discussed above), the request does not necessarily comprise the filtering information. The filtering information, known by the terminal equipment 110, is included in the corresponding request by the terminal equipment 110 itself. However, in some embodiments, the step S200 (in any of the variants discussed above) is implemented and the request comprises as well the filtering information. This allows e.g. a double checking of the filtering information by the terminal equipment 110.

Back to Figure 2, in **step S230,** the management center server 120 obtains the filtering item based on the filtering information. As discussed above in relation with Figure 1, the filtering information may be e.g. an account identifier associated to the reception device 100 within the management center server 120. Such account identifier may be associated to the unique identifier of the reception device 100 within the management center server 120. The management center server 120 may thus obtain, as the filtering item, the unique identifier of the reception device 100 from the account identifier.

However, in other embodiments, the filtering information may comprise the filtering item itself, or may directly be the filtering item. In such embodiments, the management center server 120 does not necessarily execute the step S230.

Back to Figure 2, in **step S240,** the management center server 120 sends the requested configuration information to the reception device 100 as part of a data stream broadcasted in the broadcast network 150.

For instance, when the configuration information relates to a license agreement for the playback of a DRM protected content, the management center server 120 (e.g. a backend server of an operator) may provide the corresponding request to a DRM license server. The DRM license server may check the license request validity and generate the license response and provide it to the management center server 120. The management center server 120 may in turn send to the reception device 100 the configuration information comprising the license response. For that, the management center server 120 may split the license response as several parts that compose the configuration information. The management center server 120 sends them as several private sections addressed for the reception device 100 to a mux equipment of the broadcast network 150. The private section receiver in the reception device 100 retrieves the parts of the configuration information from the stream of private sections, and rebuilds the original license response.

Back to Figure 2 and step S240, the configuration information is associated to the filtering item in the data stream for allowing the reception device 100 to identify the configuration information in the data stream. Thus, in step S240, the reception device 100 receives the configuration information sent by the management center server 120 using the filtering item for identifying the requested configuration information in the data stream. For instance, in embodiments wherein the filtering item comprises a unique identifier of the reception device 100, the reception device 100 may compare the filtering item associated to the configuration information in the data stream with the unique identifier stored in a memory of the reception device 100. In case the filtering item matches the unique identifier stored in the memory, the reception device 100 may identify the corresponding configuration information in the data stream as the requested configuration information.

The disclosed method thus allows the reception device 100 to acquire the configuration information even when it is not connected to a broadband network in addition to the broadcast network 150.

Referring now to **Figure 3****,** we describe an example of the structural blocks implemented in the device 100d.

More particularly, in order to be able to implement all or part of the steps of the method for acquiring configuration information of Figure 2 (according to any of the embodiments disclosed above), as executed by the reception device 100, in some embodiments the device 100d comprises:
- a non-volatile memory 303 (e.g. a read-only memory (ROM), a hard disk, a flash memory, etc.);
- a volatile memory 301 (e.g. a random-access memory or RAM) and a processor 402.

The non-volatile memory 303 is a non-transitory computer-readable carrier medium. It stores executable program code instructions, which are executed by the processor 302 in order to enable implementation of some steps of the method described above (method for acquiring configuration information) in the various embodiments disclosed above in relationship with Figure 2.

Upon initialization, the aforementioned program code instructions are transferred from the non-volatile memory 303 to the volatile memory 301 so as to be executed by the processor 302. The volatile memory 301 likewise includes registers for storing the variables and parameters required for this execution.

The steps of the method for acquiring configuration information as executed by the reception device 100 may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

Referring now to **Figure 4****,** we describe an example of the structural blocks implemented in the device 110d.

More particularly, in order to be able to implement all or part of the steps of the method for acquiring configuration information of Figure 2 (according to any of the embodiments disclosed above), as executed by the terminal equipment 110, in some embodiments the device 110d comprises:
- a non-volatile memory 403 (e.g. a read-only memory (ROM), a hard disk, a flash memory, etc.);
- a volatile memory 401 (e.g. a random-access memory or RAM) and a processor 402.

The non-volatile memory 403 is a non-transitory computer-readable carrier medium. It stores executable program code instructions, which are executed by the processor 402 in order to enable implementation of some steps of the method described above (method for acquiring configuration information) in the various embodiments disclosed above in relationship with Figure 2.

Upon initialization, the aforementioned program code instructions are transferred from the non-volatile memory 403 to the volatile memory 401 so as to be executed by the processor 402. The volatile memory 401 likewise includes registers for storing the variables and parameters required for this execution.

The steps of the method for acquiring configuration information as executed by the terminal equipment 110 may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

Referring now to **Figure 5****,** we describe an example of the structural blocks implemented in the device 120d.

More particularly, in order to be able to implement all or part of the steps of the method for acquiring configuration information of Figure 2 (according to any of the embodiments disclosed above), as executed by the management center server 120, in some embodiments the device 110d comprises:
- a non-volatile memory 503 (e.g. a read-only memory (ROM), a hard disk, a flash memory, etc.);
- a volatile memory 501 (e.g. a random-access memory or RAM) and a processor 502.

The non-volatile memory 503 is a non-transitory computer-readable carrier medium. It stores executable program code instructions, which are executed by the processor 502 in order to enable implementation of some steps of the method described above (method for acquiring configuration information) in the various embodiments disclosed above in relationship with Figure 2.

Upon initialization, the aforementioned program code instructions are transferred from the non-volatile memory 503 to the volatile memory 501 so as to be executed by the processor 502. The volatile memory 501 likewise includes registers for storing the variables and parameters required for this execution.

The steps of the method for acquiring configuration information as executed by the management center server 120 may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

## Claims

1. Method for acquiring, from a management center server (120), configuration information by a reception device (100) connected to the management center server through a broadcast network (150), the configuration information allowing the update of the internal setting of the reception device,
**characterized in that** the reception device executes:
- providing (S210) a request for said configuration information to a communication interface for allowing a terminal equipment (110) connected to the management center server through a communications network (160) to obtain the request and to send (S220) a corresponding request to the management center server;
- receiving (S240) said configuration information provided by said management center server as part of a data stream broadcasted in said broadcast network, said configuration information being associated to a filtering item in said data stream, the filtering item being known from the reception device for allowing the reception device to identify said configuration information in the data stream.

2. Method according to claim 1 wherein said providing a request for said configuration information to a communication interface comprises:
- providing (S212) the request to a wireless communications transceiver for sending (S213) the request to the terminal equipment through a wireless communication link.

3. Method according to claim 1 wherein said providing a request for said configuration information to a communication interface comprises:
- generating (S211) a graphical item (170gi) representative of the request;
- providing (S212) the graphical item to a display (170) for displaying the graphical item on the display for allowing the terminal equipment to obtain the request by scanning (S213) the graphical item.

4. Method according to any of the claims 1 to 3 wherein said request for said configuration information comprises filtering information allowing to obtain said filtering item.

5. Method according to any of the claims 1 to 4 wherein said reception device executes:
- providing (S200) the filtering information allowing to obtain the filtering item to the communication interface.

6. Method for acquiring, from a management center server (120), configuration information by a reception device (100) connected to the management center server through a broadcast network (150), the configuration information allowing the update of the internal setting of the reception device,
**characterized in that** a terminal equipment (110) connected to the management center server through a communications network (160) executes:
- obtaining (S210) a request, from the reception device, for said configuration information;
- sending (S220) a corresponding request for said configuration information to the management center server through the communications network for having the management center server to provide said configuration information to the reception device as part of a data stream broadcasted in said broadcast network, the corresponding request comprising filtering information allowing to obtain a filtering item known from the reception device and to be associated to said configuration information in the data stream for allowing the reception device to identify said configuration information in the data stream.

7. Method according to claim 6 wherein said obtaining a request from the reception device comprises:
- receiving (S213) said request through a wireless communication link with the reception device.

8. Method according to claim 6 wherein said obtaining a request from the reception device comprises:
- scanning (S213) a graphical (170gi) item representative of said request displayed on a display (170).

9. Method according to any of the claims 6 to 8 wherein said terminal equipment executes:
- receiving (S203) the filtering information through the wireless communication link with the reception device; and
- including the filtering information in said corresponding request.

10. Method according to any of the claims 6 to 8 wherein said terminal equipment executes:
- obtaining (S203) the filtering information by scanning a graphical representation of the filtering information displayed on the display; and
- including the filtering information in said corresponding request.

11. Method for acquiring, from a management center server (120), configuration information by a reception device (100) connected to the management center server through a broadcast network (150), the configuration information allowing the update of the internal setting of the reception device,
**characterized in that** the management center server executes:
- receiving (S220) a request for said configuration information, the request being sent by a terminal equipment (110) connected to the management center server through a communications network (160), the request comprising filtering information allowing to obtain a filtering item known from the reception device;
- sending (S240) said configuration information to the reception device as part of a data stream broadcasted in said broadcast network, the filtering item being associated to said configuration information in the data stream for allowing the reception device to identify said configuration information in the data stream.

12. Computer program product **characterized in that** it comprises program code instructions for implementing a method according to any of the claims 1 to 11.

13. Device (100d) for acquiring, from a management center server, configuration information by a reception device (100) connected to the management center server through a broadcast network (150), the configuration information allowing the update of the internal setting of the reception device,
**characterized in that** it comprises a processor (302) or a dedicated computing machine configured for:
- providing a request for said configuration information to a communication interface for allowing a terminal equipment (110) connected to the management center server through a communications network (160) to obtain the request and to send a corresponding request to the management center server;
- receiving said configuration information provided by said management center server as part of a data stream broadcasted in said broadcast network, said configuration information being associated to a filtering item in said data stream, the filtering item being known from the reception device for allowing the reception device to identify said configuration information in the data stream.

14. Device (110d) for acquiring, from a management center server (120), configuration information by a reception device (100) connected to the management center server through a broadcast network (150), the configuration information allowing the update of the internal setting of the reception device,
**characterized in that** it comprises a processor (402) or a dedicated computing machine configured for:
- obtaining a request, from the reception device, for said configuration information;
- sending a corresponding request for said configuration information to the management center server through a communications network (160) for having the management center server to provide said configuration information to the reception device as part of a data stream broadcasted in said broadcast network, the corresponding request comprising filtering information allowing to obtain a filtering item known from the reception device and to be associated to said configuration information in the data stream for allowing the reception device to identify said configuration information in the data stream.

15. Device (120d) for acquiring, from a management center server (120), configuration information by a reception device (100) connected to the management center server through a broadcast network (150), the configuration information allowing the update of the internal setting of the reception device,
**characterized in that** it comprises a processor (502) or a dedicated computing machine configured for:
- receiving a request for said configuration information, the request being sent by a terminal equipment (110) connected to the management center server through a communications network (160), the request comprising filtering information allowing to obtain a filtering item known from the reception device;
- sending said configuration information to the reception device as part of a data stream broadcasted in said broadcast network, the filtering item being associated to said configuration information in the data stream for allowing the reception device to identify said configuration information in the data stream.
